(19) Europäisches Patentamt
European Patent Office
Office européen des brevets

(11) Publication number: **0 399 108 A1**

(12) # EUROPEAN PATENT APPLICATION

(21) Application number: **89201350.9**

(22) Date of filing: **26.05.89**

(51) Int. Cl.$^5$: **C08G 81/00, C09D 163/00, C09D 167/00**

(43) Date of publication of application:
**28.11.90 Bulletin 90/48**

(84) Designated Contracting States:
**AT BE CH DE ES FR GB GR IT LI LU NL SE**

(71) Applicant: **AKZO N.V.**
**Velperweg 76**
**NL-6824 BM Arnhem(NL)**

(72) Inventor: **Segura, Serge**
**45 Rue Blanche**
**F-60270 Gouvieux(FR)**
Inventor: **Bouvier, Daniel**
**19, Rue de la Garenne**
**F-60300 Avilly St. Leonard(FR)**
Inventor: **Nota, Gabriel**
**36, Rue Victor Hugo**
**F-60500 Chantilly(FR)**
Inventor: **Tournillon, Christine**
**3, Allée Renoir**
**F-95270, Belloy en France(FR)**

(74) Representative: **Sieders, René et al**
**AKZO N.V. Patent Department (Dept. CO)**
**P.O. Box 9300**
**NL-6800 SB Arnhem(NL)**

(54) **Polyester/epoxy block copolymer as binder for metal primer.**

(57) A liquid coating composition is provided which comprises, as a binder, a block copolymer of a particular carboxy-terminated polyester resin and an epoxy resin. The coating composition may also contain a curing agent for the hydroxyl groups of the binder, as well as a pigment. The coating compositions in accordance with the present invention display a good combination of properties and, in particular, excellent flexibility, making them especially well suited for use as a primer for metals.

EP 0 399 108 A1

# Polyester/Epoxy Block Copolymer as Binder for Metal Primer

## Background of the Invention

The present invention relates generally to a coating composition suitable for use as a primer for metals. More particularly, the present invention relates to such a coating composition which comprises, as a binder, a block copolymer of a particular carboxy-terminated polyester resin and an epoxy resin.

United Kingdom Patent Specification No. 1283653 and Canadian Patent No. 703916, both of which are incorporated by reference herein for all purposes, disclose compositions comprising "slightly branched" carboxy-terminated polyesters and epoxy compounds, but in both cases the epoxy compounds function as crosslinkers for the "slightly branched" polyesters, producing highly crosslinked products and not block copolymers. As such, these compositions are not suitable for use as binders in coating compositions, as are the block copolymers of the present invention.

## Summary of the Invention

The present invention, in its overall concept, provides such a coating composition which comprises, as a binder, a block copolymer of the formula A-$(BA)_m$ or B$(A-B)_n$, wherein m and n are numbers in the range of 1 to 20, which block copolymer is built up from one or more blocks A of a carboxy-terminated polyester resin and one or more blocks B of an epoxy resin having an epoxy functionality of 1,5-2.5 and an epoxy equivalent weight of 100-2000, characterized in that the carboxy-terminated polyester resin comprises the polycondensation product of the components (1) an carboxylic diacid, (2) a dihydroxy compound and, optionally, (3a) an hydroxy acid and/or (3b) a lactone compound, wherein these components are non-aromatic, that is, do not contain aromatic groups attached directly to the carboxy and/or hydroxy functional groups.

More preferably, the coating compositions of the present invention further comprise a curing agent for the hydroxyl groups of the aforementioned binders, as well as a pigment.

It should be noted that, for the present specification, reference to a particular component in the singular also refers to multiples of that component, e.g., an aliphatic carboxylic diacid refers to one or more aliphatic carboxylic diacids, a dihydroxy compound refers to one or more dihydroxy compounds, etc.

The coating compositions of the present invention display a good combination of properties and, in particular, excellent film flexibility, making them particularly suitable for use as a primer for metals.

EP-B-0111986, incorporated by reference herein for all purposes, relates to similar coating compositions suitable for use as primers for metals, which comprise a binder composition based upon a block copolymer of a particular polyester resin and an epoxy resin, and a curing agent for the binder. The polyester resin comprises the polycondensation product of terephthalic and/or isophthalic acid (aromatic carboxylic diacids), a dihydroxy compound and, optionally, minor amounts of tri- and higher-functional hydroxy and carboxy compounds. While the coating compositions of EP-B-0111986 have generally been found to exhibit a desirable combination of properties in the aforementioned uses, the coating compositions of the present invention have surprisingly been found to have significantly better film flexibility.

These and other features and advantages of the present invention will be more readily understood by those skilled in the art from a reading of the following detailed description.

## Detailed Description of the Preferred Embodiment

As mentioned earlier, the binders of the present invention comprise a block copolymer of the formula A-$(B-A)_m$ or B-$(A-B)_n$, wherein m and n are numbers in the range of 1 to 20, which block copolymer is built up from (A) one or more blocks of a carboxy-terminated polyester resin and (B) one or more blocks of an epoxy resin.

The carboxy-terminated polyester resin comprises the polycondensation product of the components (1) a carboxylic diacid, (2) a dihydroxy compound and, optionally, (3a) an hydroxy acid and/or (3b) a lactone compound, wherein the above-components are non-aromatic. By "non-aromatic" is it meant that the above components contain no aromatic groups directly attached to the functional (hydroxy and carboxy) groups.

In accordance with the present invention, therefore, these non-aromatic compounds should be substantially excluded from the carboxy-terminated polyester resins. Further, in accordance with the present

invention, tri-and higher-functional (carboxy and/or hydroxy) compounds should also be substantially excluded.

Suitable carboxylic diacids are those of the general formula (I)

HOOC-R-COOH (I) .

wherein R is a hydrocarbon group, more preferably a (cyclo)aliphatic hydrocarbon group, having from 1 to 34 carbon atoms, more preferably from 1 to 12 carbon atoms. Such hydrocarbon groups may be linear or branched, and are preferably saturated but also may be unsaturated. As indicated above, however, carboxylic diacids containing aromatic groups directly attached to the carboxy groups are specifically excluded from general formula (I).

As particular examples of preferred carboxylic diacids may be mentioned malonic acid, succinic acid, glutaric acid, adipic acid, pimelic acid, suberic acid, azelaic acid, sebacic acid, dodecane dioic acid, dimeric fatty acids, trimethyl adipic acid, maleic acid and cyclohexane dicarboxylic acids.

Especially preferred carboxylic diacids are those wherein R is a linear alkyl group, and particularly adipic acid and sebacic acid.

Suitable dihydroxy compounds may be branched or unbranched, and may contain ether and/or ester linkages in their structures but, as indicated above, those containing aromatic groups directly attached to the hydroxy groups are specifically excluded. As examples of suitable dihydroxy compounds may be mentioned ethylene glycol, 1,2-propylene glycol, 1,3-propylene glycol, neopentyl glycol, 1,2-butane diol 1,3-butane diol, 1,4-butane diol, 1,5-pentane diol, 1,6-hexane diol, diethylene glycol, triethylene glycol, dipropylene glycol, trimethyl hexane diol, polycaprolactone diols, 1.1′-isopropylidene-bis-(p-phenylene-oxy)-di-β-ethanol, and 1.1′-isopropylidene-bis-(p-phenylene-oxy)-di-ω-propanol-2.

Particularly preferred of these dihydroxy compounds are the diols and polyalkylene glycols, especially those having from 2 to 8 carbon atoms.

Suitable hydroxy acids are those of the general formula (II)

HO-$R^1$-COOH (II)

wherein $R^1$ is a hydrocarbon group, more preferably a (cyclo)aliphatic hydrocarbon group, having from 1 to 17 carbon atoms, more preferably from 7 to 17, carbon atoms. As with the carboxylic diacids, such hydrocarbon groups may be linear or branched, and are preferably saturated but also may be unsaturated. As indicated before, hydroxy acids containing aromatic groups directly attached to the hydroxy and/or carboxy groups are again specifically excluded from general formula (II).

Especially preferred hydroxy acids are those wherein $R^1$ is a linear alkyl group, and particularly hydroxycaproic acid and hydroxy stearic acid.

Suitable lactone compounds are those of the general formula (III)

$R^2$-COO (III)

wherein $R^2$ is an aliphatic hydrocarbon group having from 2 to 10, more preferably from 5 to 9, carbon atoms. Most preferred are those wherein $R^2$ is a linear alkyl group, particularly ε-caprolactone.

In the preparation of the polyester resin, use may optionally be made of derivatives of the aforementioned components such as epoxy compounds, acid chlorides, acid anhydrides or methyl diesters.

The polycondensation reaction of the above components is generally carried out at a temperature of 140°C to 300°C, preferably 180°C to 260°C, and in an inert atmosphere of, for example, nitrogen and/or carbon dioxide. The water evolved in the polycondensation reaction may be removed in a normal manner, e.g., by distillation under reduced pressure or by azeotropic distillation with the aid of an organic solvent such as toluene, xylene or mixed aromatic solvents. After termination of the polycondensation these solvents may optionally be removed from the polyester resin by distillation.

The polycondensation reaction is continued until the polyester resin has the desired acid number, preferably from 10 to 140, and more preferably from 20 to 110. The hydroxyl number of the resulting polyester resin preferably should also not be higher than 2, and more preferably from 0 to 0,8. The acid number and hydroxyl number are expressed in mg KOH per g of polyester resin. Further, the polyester resin should have a number average molecular weight of from 800 to 10000, more preferably from 1000 to 6000.

Epoxy resins suitable for use in the present block copolymers may be solid or liquid, with an epoxy functionality of from 1,5 to 2,5 and an epoxy equivalent weight of from 100 to 2000.

Examples of such suitable epoxy resins include glycidyl groups-containing resins such as polyacrylic resins, polyesters, polyethers or polyurethanes which all contain one or more glycidyl groups per molecule. Use may also be made of mixtures of epoxy resins. Optionally, the epoxy resin may be used as a solution

in a suitable solvent.

Preferred epoxy resins are those of the general formula (IV)

```
H2C-CH-CH2-(O-R³-O-CH2-CHOH-CH2)p-O-R³-O-CH2-CH-CH2      (IV)
  \ /                                           \ /
   O                                             O
```

wherein $R^3$ represents an aliphatic, cycloaliphatic or aromatic group, preferably containing from 2 to 18 carbon atoms, and p is a number from 0 to 50, preferably 0 to 10. Adducts of these epoxy resins with a (cyclo)aliphatic or heterocyclic diamine, preferably a di-secondary amine such as piperazine, are also suitable.

Examples of these preferred epoxy resins include the glycidyl ethers of, for example, ethylene glycol diethylene glycol triethylene glycol 1,2-propylene glycol, 1,3-propylene glycol, 1.5-pentane diol, bis-(4-hydroxycyclohexyl)-2,2-propane, 4,4′-dihydroxybenzophenone, bis-(4-hydroxyphenyl)methane, bis-(4-hydroxyphenyl)-1,1′-ethane, bis(4-hydroxyphenyl)-1,1-isobutane and 1,5-dihydroxynapthalene.

It is especially preferred that use should be made of a diglycidyl ether based upon bis-(4-hydroxyphenyl)-2,2-propane.

In more preferred aspects, the epoxy resin has an epoxy functionality of from 1.8 to 2,2, an epoxy equivalent weight of from 100 to 700, most preferably from 150 to 500, and a number average molecular weight of from 150 to 1250.

The block copolymer may be prepared in any convenient manner by reaction of the carboxylic polyester resin with the epoxy resin. The block copolymer may optionally be prepared by using two or more carboxylic polyester and/or epoxy resins.

A suitable procedure for producing the block copolymers comprises the stepwise addition of the epoxy resin(s) to a solution of the polyester resin(s) and heating the mixture to a temperature generally in the range of from 85°C to 195°C, preferably from 100°C to 180°C. The reaction mixture may, if required, include a catalyst known in itself, for instance, triphenyl phosphine, benzyl triphenyl phosphonium chloride, benzyl trimethyl ammonium methoxide, a tertiary amine such as benzyl dimethylamine, or a metal compound such as zirconium octoate. A preferred solvent for the polyester resin and resulting block copolymer is an aromatic hydrocarbon such as toluene, xylene or a mixture of aromatic hydrocarbons having a boiling point of, for example, 140°C to 180°C. To the resulting block copolymer obtained on the conclusion of the reaction may be added a polar solvent such as isophoron, methyl ethyl ketone, diacetone alcohol, the methyl ether of propylene glycol, the methyl ether of propylene glycol acetate, and diesters such as dimethyl glutarate, dimethyl succinate and dimethyl adipate.

The weight ratio of the carboxylic polyester resin to the epoxy resin is generally chosen so that, at the start of the reaction to form the block copolymer, the reaction mixture contains from 0,5 to 2,0, preferably from 0,7 to 1,3, moles of epoxy of the epoxy resin per mole of carboxyl of the polyester resin. In this manner, a block copolymer having carboxyl and/or epoxy end groups is obtained. The block copolymer is preferably built up of from 2 to 11 blocks A and 1 to 10 blocks B (m = 1 to 10), or 1 to 10 blocks A and 2 to 11 blocks B (n = 1 to 10).

The number average molecular weight of the resulting block copolymer is preferably from 3000 to 80000, and more preferably from 5000 to 30000. The acid number of the block copolymer is preferably not higher than 23, and more preferably in the range of from 0 to 15.

The block copolymer is generally applied as a binder in a baking or non-baking coating composition which can serve as a finishing coat or a primer coat, intermediate coat or top coat in a multilayer paint system for metals, for instance in coil coating, and in can coating for the inside of cans, as shop primer, as a zinc-rich paint or as physically drying primer. The substrate to be coated in these cases is generally of a pretreated or non-pretreated metal or alloy such as iron, galvanized iron, steel, sheet metal or aluminum. As examples of other suitable substrates may be mentioned wood, elastomers and reinforced or non-reinforced synthetic materials such as polyesters, polycarbonates, polyvinyl chloride, poly(meth)acrylates, polyamides, polypropylene, polystyrene, ABS resins and unsaturated polyesters.

These coating compositions also contain a curing agent for the hydroxyl groups of the block copolymer, which are the result of the reaction between the carboxyl of the polyester and the epoxy group. Sutable curing agents are blocked or non-blocked aliphatic, cycloaliphatic or aromatic di-, tri-or polyvalent isocyanates, specific examples of which are listed in previously incorporated EP-B-0111986. For blocking the isocyanate compound, use may be made of any well-known blocking agent.

Instead of or in addition to the isocyanate curing agents, other suitable blocked and unblocked curing agents such as the N-methyloyl groups- and/or N-methyloyl ether groups-containing aminoplasts and phenol resins, as mentioned in previously incorporated EP-B-0111986, may also be utilized.

The curing agent should be present in the coating composition in an amount such that the molar ratio of the reactive groups of the curing agent to that of the hydroxyl groups of the block copolymer is in the range of from 0,1 to 1,7, preferably from 0,2 to 1,5.

Optionally, and depending upon the field of application envisaged, the coating compositions of the present invention may contain solid powdered polymers and pigments such as mentioned in previously incorporated EP-B-0111986. The coating compositions of the present invention may also contain the usual adjuvants and additives, for example, pigment dispersing agents, antisag agents, rheology control agents, corrosion inhibiting compounds (e.g., metallic zinc or metallic aluminum), plasiticizers, gloss agents and accelerators such as p-toluene sulfonic acid and blocked products of such accelerators.

The coating compositions of the present invention may be applied to a substrate in any convenient manner, such as by roller coating or (electrostatic) spraying. The composition may be cured or baked in the usual manner. For example, in a coil coating process baking is to be carried out at an applied final temperature of the substrate of about 200 °C to 280 °C, which temperature is normally reached by contacting the coated substrate for a short time (e.g., 10 to 90 seconds) with air or combustion gases at a temperature of 250 °C to 400 °C. Application and baking conditions during coil coating are known to one skilled in the art and need not be further described here. Suitable baking temperatures for other fields of application may, for example, range from 120 °C to 210 °C.

The foregoing more general discussion of this invention will be further exemplified by the following specific examples offered by way of illustration and not limitation of the above-described invention.

## EXAMPLES

### Preparation of Carboxy-Terminated Polyester Resins

Carboxy-terminated polyester resins A-G were produced from the components, and having the properties, as set forth in Table I below.

To prepare such polyester resins, the diols were first charged to a reactor provided with a stirrer, column and thermometer, which was maintained under a nitrogen atmosphere. The temperature of the reactor was then raised to 90-110 °C, and the aliphatic diacids were added. The temperature was then again raised to 220-240 °C, and maintained in this ranged until no further distillation occurred.

At this point, the column was exchanged with a water separator and a reflux condensor, and about 3% by weight of a mixed aromatic solvent was added (Solvesso 100, commercially available from Exxon Chemical). The temperature was then maintained at 230-250 °C until the acid number (expressed in mg KOH per g of solid resin) stabilized, at which time the temperature was decreased to 180 °C and additional solvent (Solvesso 100) was added.

TABLE I

| Polyester | A | B | C | D | E | F | G |
|---|---|---|---|---|---|---|---|
| Components (parts by weight) | | | | | | | |
| Adipic Acid | 61,15 | 58,42 | 64,44 | 59,76 | 59,94 | --- | 59,26 |
| Sebacic Acid | --- | --- | --- | --- | --- | 67,37 | --- |
| 1,6-Hexane Diol | 29,19 | 31,18 | --- | 30,23 | --- | 24,52 | 30,60 |
| Neopentylglycol | --- | --- | 17,78 | --- | --- | --- | --- |
| 1,5-Pentane Diol | --- | 10,40 | --- | --- | 40,06 | --- | --- |
| 1,2-Propane Diol | 9,66 | --- | 17,78 | 10,01 | --- | 8,11 | 10,14 |
| Acid Number | 60,8 | 56,8 | 52,4 | 34,3 | 33,2 | 29,4 | 25,1 |
| Mn | 1845 | 1975 | 2140 | 3270 | 3380 | 3820 | 4470 |
| Solids Content (%) | 69,1 | 68,5 | 68,7 | 69,3 | 70,0 | 69,0 | 69,8 |

(after dilution)

Preparation of Block Copolymers

Block copolymers I to IX were prepared from the components, and having the properties, as set forth in Table II below.

Epoxy resin 1 was a diglycidyl ether of Bisphenol A with an epoxy equivalent of 188 (commercially available under the trade designation Epikote 828 from Shell Chemical). Epoxy resin 2 was a diglycidyl ether of Bisphenol A with an epoxy equivalent of 470 (commercially available under the trade designation Epikote 1001 from Shell Chemical). The catalyst was triphenylphosphine.

To prepare the block copolymers, the polyester resins prepared above were charged to a reactor equipped with a stirrer, thermometer and reflux condenser, which was maintained under a nitrogen atmosphere. The temperature was then raised to 90-100° C, and the epoxy resin and catalyst added.

The temperature was then again increased to 145-155° C and maintained in this range until the acid number (expressed in mg KOH per g of solid resin) fell below 2, at which point the reaction mixture was cooled and diluted with additional solvent (Solvesso 100). Upon the temperature falling below 100° C, additional solvent (Dowanol PM, a propylene glycol monomethyl ether commercially available from Dow Chemical), and/or Estasol (a blend of dimethyl succinate, dimethyl glutarate and dimethyl adipate commercially available from Chemoxy) was added.

TABLE II

| Block Copolymer | I | II | III | IV | V | VI | VII | VIII | IX |
|---|---|---|---|---|---|---|---|---|---|
| Components (parts by weight) | | | | | | | | | |
| Polyester (solids) | A<br>58,56 | G<br>73,00 | B<br>60,17 | D<br>72,88 | E<br>87,73 | C<br>65,79 | F<br>75,86 | A<br>63,50 | B<br>79,15 |
| Epoxy Resin 1 | --- | --- | --- | --- | 12,27 | --- | --- | --- | --- |
| Epoxy Resin 2 | 41,44 | 27,00 | 39,83 | 27,12 | --- | 34,21 | 24,14 | 36,50 | 20,85 |
| Catalyst (additional parts by weight) | 0,13 | 0,16 | 0,30 | 0,33 | 0,26 | 0,31 | 0,20 | 0,34 | 0,18 |
| Acid Number | 0,1 | 0,3 | 0,4 | 0,7 | 0,1 | 0,3 | 1,7 | 0,4 | 1,5 |
| Mn | 8100 | 8070 | 8400 | 15200 | 15000 | 17700 | 17200 | 22700 | 22350 |
| Solids Content (%) (after dilution) | 40 | 40 | 40 | 40 | 40 | 40 | 40 | 40 | 42 |
| Solvent Composition | | | | | | | | | |
| Solvesso 100 | 80 | 80 | 60 | 80 | 60 | 60 | 60 | 80 | 80 |
| Estasol | 20 | 20 | -- | 20 | -- | -- | -- | 20 | 20 |
| Dowanol PM | -- | -- | 40 | -- | 40 | 40 | 40 | -- | -- |

Comparative Block Copolymer CI

A comparative block copolymer was produced in accordance with the procedure utilized to produce "polyester epoxy block copolymer 7" of EP-B-0111986, in which the polyester comprised an aromatic diacid (isophthalic acid) as the acid component.

Examples 1-9 and Comparative Example 1

Coating compositions were prepared by intermixing the following components:

| Component | Amount (parts by weight) |
|---|---|
| (a) polyester-epoxy block copolymer | 42,7 |
| (b) titanium dioxide | 15,9 |
| (c) strontium chromate | 2,0 |
| (d) silica | 2,5 |
| (e) curing agent | 3,7 |
| (f) Solvesso 100 | 19,9 |
| (g) methoxy propanol | 13,3 |

The curing agent was the adduct of hexamethylene diisocyanate and 1 mole of water (commercially available under the trade designation Desmodur N from Bayer AG), which was blocked with methyl ethyl

ketoxime in methoxypropanol acetate (NVM 75%).

The coating compositions were applied applied by roller coating onto electrogalvanized steel (70/70 g/$m^2$),which had previously been pretreated with a chromate conversion layer (commercially available under the trade designation Granodine 93 CF from compagnie Francaise de Produits Industriels) then baked at 232°C PMT for 40 seconds. A smooth film free of defects was obtained, with a dry film thickness of 5±1 μm.

The resulting coatings were evaluated for flexibility and corrosion resistance by the following tests:

(a) Erichsen indentation test (DIN 53156), expressed in mm.

(b) Reverse impact test (ASTM D2794-1982), expressed in in-lbs.

(c) T-Bend test (European Coil Coating Association), expressed in ratings of T0, T1, T2, etc. A value of T0 denotes excellent flexibility, with a value of T2 to T4 denoting acceptible flexibility.

(d) Salt spray test (ASTM B117), with results reported in mm delamination on the scribe after 500 hours exposure.

The test results are presented below in Table III.

TABLE III

| Example | Block Copolymer | T-Bend | Erichsen Identation | Reverse Impact | Salt Spray |
|---|---|---|---|---|---|
| 1 | I | 1T | 9 | 160 | 0 |
| 2 | II | 1T | 10 | 160 | 0 |
| 3 | III | 0,5T | 8,3 | 160 | 0 |
| 4 | IV | 0T | 10 | 160 | 0 |
| 5 | V | 1,5T | 8 | 160 | 0 |
| 6 | VI | 1T | 8 | 160 | 0 |
| 7 | VII | 1T | 9,1 | 160 | 1 |
| 8 | VIII | 1,5T | 8,5 | 160 | 0 |
| 9 | IX | 0,5T | 9 | 160 | 0 |
| C1 | CI | 2T | 7,5 | 80 | 0,5 |

These results show that the coating compositions in accordance with the present invention (Examples 1-9) exhibit a better degree of flexibility than those of the comparative example, wherein the polyester of the block copolymer is built up from aromatic diacids.

Many modifications and variations may be made to the embodiments specifically mentioned here without substantially departing from the concept of the present invention. Accordingly, it should be clearly understood that the preferred form of the invention described herein is exemplary only, and not intended as a limitation on the scope thereof.

## Claims

1. A liquid coating composition comprising, as a binder, a block copolymer of the formula $A-(B-A)_m$ or $B-(A-B)_n$, wherein m and n are numbers in the range of 1 to 20, which block copolymer is built up of one or more blocks (A) of a carboxy-terminated polyester resin and one or more blocks (B) of an epoxy resin having an epoxy functionality of 1,5-2,5 and an epoxy equivalent weight of 100-2000, characterized in that the carboxy-terminated polyester resin comprises the polycondensation product of the components (1) a carboxylic diacid, (2) a dihydroxy compound and, optionally, (3a) a hydroxy acid and/or (3b) a lactone compound, wherein said components contain no aromatic groups directly attached to the carboxy and/or hydroxy functional groups.

2. The liquid coating composition according to claim 1, characterized in that it further comprises a curing agent for the hydroxyl groups of the block copolymer.

3. The liquid coating composition according to claim 2, characterized in that the curing agent for the hydroxyl groups of the block copolymer comprises a blocked or non-blocked aliphatic, cycloaliphatic or aromatic di-, tri- or polyvalent isocyanate, an aminoplast and/or a phenol resin.

4. The liquid coating composition according to any of the claims 1-3, characterized in that it further comprises a pigment.

5. The liquid coating composition according to any of the claims 1-4, characterized in that the carboxylic diacid comprises a compound of the general formula (I)

HOOC-R-COOH (I)

wherein R is a hydrocarbon group having 1 to 34 carbon atoms.

6. The liquid coating composition according to claim 5, characterized in that R is a (cyclo)aliphatic hydrocarbon group.

7. The liquid coating composition according to claim 6, characterized in that R is a linear alkyl group.

8. The liquid coating composition according to claim 5, characterized in that the hydrocarbon group has from 1 to 12 carbon atoms.

9. The liquid coating composition according to any of claims 1-4, characterized in that the dihydroxy compound is selected from diols and polyalkylene glycols.

10. The liquid coating composition according to claim 9, characterized in that the dihydroxy compound has from 2 to 8 carbon atoms.

11. The liquid coating composition according to any of the claims 1-4, characterized in that the hydroxy acid comprises a compound of the general formula (II)

$HO-R^1-COOH$ (II)

wherein $R^1$ is a hydrocarbon group having 1 to 17 carbon atoms.

12. The liquid coating composition according to claim 11, characterized in that $R^1$ is a (cyclo)aliphatic hydrocarbon group.

13. The liquid coating composition according to claim 12, characterized in that $R^1$ is a linear alkyl group.

14. The liquid coating composition according to claim 11, characterized in that the hydrocarbon groups has from 7 to 17 carbon atoms.

15. The liquid coating composition accordaning to any one of claims 1-4, characterized in that the lactone compound comprises a compound of the general formula (III)

$$R^2\text{-}COO \qquad (III)$$

wherein $R^2$ is an aliphatic hydrocarbon group having from 2 to 10 carbon atoms.

16. The liquid coating composition according to claim 15, characterized in that $R^2$ comprises a linear alkyl group.

17. The liquid coating composition according to claim 15, characterized in that $R^2$ comprises an aliphatic hydrocarbon groups having from 5 to 9 carbon atoms.

18. The liquid coating composition according to any one of claims 1-4, characterized in that the carboxy-terminated polyester resin has an acid number of from 10 to 140 and a number average molecular weight of from 800 to 10000.

19. The liquid coating composition according to claim 1, characterized in that the epoxy resin is a compound of the general formula (IV)

```
H2C-CH-CH2-(O-R3-O-CH2-CHOH-CH2)p-O-R3-O-CH2-CH-CH2      (IV)
   \ /                                          \ /
    O                                            O
```

wherein $R^3$ represents an aliphatic, cycloaliphatic or aromatic group, and n is a number from 0 to 50, or an adduct thereof with a (cyclo)aliphatic or heterocyclic diamine.

20. The liquid coating composition according to claim 1, characterized in that the block copolymer has a number average molecular weight of from 3000 to 80000 and an acid number of not higher than 23.

European Patent Office

# EUROPEAN SEARCH REPORT

Application Number

EP 89 20 1350

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,D | CA-A- 703 916 (UNION CARBIDE CORP.) * Page 4, lines 15-24; claims * | 1-20 | C 08 G 81/00<br>C 09 D 163/00<br>C 09 D 167/00 |
| Y,D | EP-A-0 111 986 (AKZO N.V.) * Claims * | 1-20 | |
| Y | DE-A-2 037 701 (CIBA AG) * Claims; page 4, lines 1-8 * | 1-20 | |
| A | CH-A- 557 397 (CIBA-GEIGY AG) * Claim; column 1, lines 33-40 * | 1 | |
| A | EP-A-0 165 207 (CIBA-GEIGY AG) * Claims; page 3, lines 25-28; page 4, lines 1-8 * | 1 | |

TECHNICAL FIELDS SEARCHED (Int. Cl.5)

C 08 G
C 09 D

The present search report has been drawn up for all claims

| Place of search | Date of completion of the search | Examiner |
|---|---|---|
| THE HAGUE | 25-01-1990 | PRAS J-L.C.N. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document